# EUROPEAN PATENT SPECIFICATION

(11) **EP 1 116 703 B1**
(45) Date of publication and mention of the grant of the patent: **11.01.2006**
(21) Application number: 00200076.8
(22) Date of filing: 11.01.2000
(51) Int. Cl.: C04B 35/117, C04B 35/119, B23B 27/14

(54) **Nanocomposite dense sintered alumina based ceramic cutting tool**
Keramisches Schneidwerkzeug auf der Basis von dichtgesintertem Nanokomposit-Aluminiumoxid
Outil de coupe céramique à base d'alumine nanocomposite frittée compacte

(43) Date of publication of application: 18.07.2001
(73) Proprietor: Metalloceramica Vanzetti S.p.A., 20139 Milan (IT); H.C. Starck GmbH, 38642 Goslar (DE)
(72) Inventor: Ferrari, Alberto, 20141 Milano (IT); Pedrazzi, Giorgio, 20152 Milano (IT); Schwier, Gerd, 38640 Goslar (DE); Schmitz, Heinz Withold, 79761 Waldshut (DE); Morrell, Roger, Teddington, Middlesex TW11 8DH (GB); d'Errico, Giampaolo, 10093 Collegno, Torino (IT)
(74) Representative: De Gregori, Antonella

(56) References cited:
- EP-A- 0 443 624
- EP-A- 0 755 904
- US-A- 5 728 637
- DATABASE WPI Section Ch, Week 197948 Derwent Publications Ltd., London, GB; Class L02, AN 1979-86606B XP002135950 & JP 54 134717 A (NIPPON TUNGSTEN KK), 19 October 1979 (1979-10-19)

## Description

The present invention relates to a nanocomposite dense sintered alumina based ceramic cutting tool.

The majority of existing commercial cutting tools and wear components are based on tungsten carbide cemented with cobalt. The modern-day need for a higher cutting productivity at lower production costs has brought continuous adjustments in composition and grain size distribution of the required starting powders and to the development of protective multilayer coatings based on titanium carbide, titanium nitride and aluminium oxide materials.

Cemented carbides, however, lack the high-temperature strength required for higher speed cutting, especially without the addition of suitable cooling agents. Potential and even cheaper substitutes, using more readily available raw materials, such as oxide and nitride ceramics, are commercially available for particular applications, but they have been applied only in niche markets because of their limited properties of strength and toughness.

In addition, metal cutting operations in the automotive, steel working and machinery industries have experienced innovations and progress under the driving force of technological development in the machine tool industry and in response to new demands from the end-users. In fact, a new generation of machine tools has been developed with better characteristics in terms of stability, stiffness and multipurpose design in relation to their application in Computer Numerically Controlled CNC systems. Such tools allow operations to be carried out under cutting conditions which were not previously achievable.

The possibility of successfully using ceramics in such systems for a wide range of operations requires improved properties in terms of hardness, toughness, fracture toughness, high-temperature characteristics and thermal shock resistance.

Alumina and alumina/zirconia ceramics conventionally used for cutting tools and other mechanical applications are prepared by sintering. The inclusion in such materials of particles intended to improve hardness and wear resistance generally leads to the inhibition of sintering, the resulting materials having poor density and mechanical properties. Conventionally, therefore, such materials are normally manufactured using hot pressing techniques, which are very expensive.

In fact, conventional ceramics for machining hard steel and other alloys are based, for example, on a mixture of alumina and titanium carbide. US 4,320,203 discloses the alternative addition of TiN or Ti(C,N).

These combinations cannot be conventionally sintered to achieve a ceramic body with the 1-2 µm grain size required to obtain a cutting tool endowed with acceptable strength, because of poor reactivity of conventional ceramic powders. A mixture of, typically, aluminium oxide and titanium carbide powders in the ratio 50:50 by weight requires the mechanical assistance of hot pressing, usually in a graphite die, at elevated temperatures. This is economically inconvenient for the production of cutting tools, because of the cost of machining standard ISO geometry indexable inserts from single discs or plates achievable by hot pressing.

The nanophase α-Al₂O₃ materials can be prepared according to different methods. DE 19515820 discloses a wet chemical process involving solution/precipitation reaction using surface blocking agents to reduce the tendency to agglomerate during drying and calcining.

DE 4214724 and EP 0282291 concern gas phase reaction process using a high temperature plasma and GB 2071073 discloses a conventional milling process.

Additional methods for the production of nucleated gel Al₂O₃ are covered by DE 4217720 and DE 4217721. Other patents, relating to the same method, as for example US 5,520,713, are targeted on the production of polycrystalline grinding grits and are not suitable for the production of powders suitable for manufacturing monolithic ceramics.

Other methods of strengthening or toughening alumina-based ceramic materials, using whiskers of a hard phase such as carbides, nitrides or carbonitrides of metals such as Ti, Zr, Hf, V, Nb, or Ta, are disclosed in US 4,867,761 and US 5,141,901, but also such materials require hot-pressing.

Reinforcement by a combination of SiC whiskers and particulate hard phases is also disclosed in US 4,507,224. EP 0607111 discloses a reinforcement of alumina by SiC whiskers combined with a nanosized dispersion of a hard particulate phase such as TiN or TaN. In both cases, mechanical hot-pressing and very high costs due to the use of the whisker materials are required.

EP-A-0443624 discloses alumina based ceramics containing a hard dispersed phase M(CNO), wherein M is selected among Ti, Zr and Hf, and a metal oxide additive. Conventional powders are used which are co-milled over long period to reach sub-micrometer sizes, dried and pressed with no binder. The densification is carried out using a two step HIP sintering process at pressure up to 2000 bar

Therefore, even if some published documents already mention cutting tools as potential applications, none actually disclose an alumina based ceramic cutting tool characterised by high performance and, at the same time, by an economically viable preparation method.

Aim of the present invention is to prepare cutting tools having excellent mechanical properties and a very high cutting efficiency through a simpler and more economical method.

In view of the fact that the state of the art teaches that using the composition according to the present invention, sintering cannot be applied and it is necessary to carry out a hot pressing step for preparing a cutting tool, such hot pressing step causing very high cost of production for the cutting tools, it has been very surprisingly found that even using these particular ceramic compositions, it is possible to prepare cutting tools through sintering.

Thus, the main purpose of the present invention is to overcome the drawbacks of the known prior art, particularly through the optimization of the microstructure of nanocomposite mixed oxide/non oxide based cutting tools for high efficiency machining operations and other applications with improved performance, and through the optimization of the process conditions for preparing said ceramic material cutting tools.

The object of the present invention is a nanocomposite dense sintered alumina and/or alumina/zirconia ceramic cutting tool, obtainable by cold pressing a spray-dried suspension of a nanosized powder of alumina and/or alumina/zirconia, having an average particle size lower than 200 nanometres, containing from 1 to 35% by weight of a hard particle phase consisting of TiC and having a diameter smaller than 200 nanometres, in the presence of additives consisting of a mixture of polyethylene glycol and polyvinyl alcohol binders, to produce blanks, by sintering the so obtained blanks, at a maximum temperature of 1600°C, for a time of from 30 to 90 minutes, in an inert atmosphere under raised gas pressure and by machining the so obtained densified sintered blank into standard indexable insert cutting tool.

Further object of the present invention is the use of the cutting tool according to claim 1 for machining extremely hard (50-60 HRC) Fe-based and other alloys.

An object of the present invention is also a process for preparing a nanocomposite dense sintered alumina and/or alumina/zirconia ceramic cutting tool characterised by comprising the following steps:
a) cold pressing a spray-dried suspension of a nanosized powder of alumina and/or alumina/zirconia, having an average particle size lower than 200 nanometres, containing from 1 to 35% by weight of a hard particle phase consisting of TiC and having a diameter smaller than 200 nanometres, in the presence of additives consisting of a mixture of polyethylene glycol and polyvinyl alcohol binders,
b) sintering the so obtained pressed product at a maximum temperature of 1600°C, for a time of from 30 to 90 minutes, in an inert atmosphere under raised gas pressure and
c) machining the so obtained densified sintered blank into standard indexable insert cutting tool.

The cutting tool according to the present invention is used for metal cutting operations in the automotive, steel working and machinery industries.

In particular, the hard particle phase comprises TiC, TiN, Ti(C,N) or other hard carbides, nitrides or carbonitrides.

Furthermore, in the hard particle phase, the hard particles have an effective diameter smaller than 200 nm.

The cutting tool according to the present invention presents a hardness ranging of from 1900 to 2100 HV5, Palmqvist toughness (HV5, total crack length) ranging of from 200 to 250 µm and flank wear pattern during the working operation, described in terms of the flank wear scar depth, VB max, as large as 0.20 to 0.70 mm when machining hardened alloy steel (34CrNiMo6V) at 400 m/min for 500 sec before the tool has to be rejected on working finish quality grounds.

Therefore, according to the present invention, mixed oxide/non oxide ceramic cutting tools such as Al₂O₃/ZrO₂/TiC, are obtained, based on particular ceramic processing routes, specifically employing sintering under a raised inert gas pressure.

Furthermore, employing nanosized powders (< 200 nm), the multiphase hard-particle containing ceramics can be densified by conventional gas-pressure assisted sintering processes to yield products suitable for use as cutting tools and other articles requiring hardness and wear resistance.

The main advantage of the cutting tool according to the present invention is that, through such a processing route, it is produced in a near net shape as sintered blanks, which require a minimum of subsequent machining to achieve ISO standard geometry cutting tools.

Furthermore, the present invention allows, by preparing an ultrafine dispersion of the principal powders of alumina and titanium carbide, by combining the powders with an appropriate binder, by spray-drying the suspension, by pressing in a die to form a green shape and by sintering in an inert atmosphere under raised gas pressure, to achieve a cutting tool with a density close to theoretical density, with a minimum of porosity.

The cutting tool obtained according to the present invention can be made in a ISO standard geometry by minimal machining of a pressed and sintered blank.

Such a material has been machined into ISO standard cutting tools with a significantly reduced production cost.

The following examples are provided for a better illustration of the present invention.

### Example 1

Alumina powder was prepared using the nucleated solution-sol-gel method, followed by calcining at 1000°C to achieve a sub micrometre powder. For zirconia, a commercially available powder in monoclinic form was used. Titanium carbide powder was produced by carbothermal reaction between titanium dioxide and carbon, using a hammer-mill to break up aggregates and ball-milling to achieve a nanometre sized powder.

A mixture comprising 20 parts by weight of TiC, 76 parts by weight of Al₂O₃ and 4 parts by weight of monoclinic zirconia were milled together in an attritor mill to yield a powder of specific surface area greater than 15 m2/g in suspension. A mixture of polyethylene glycol and polyvinyl alcohol binders was added and the mixture was spray-dried to form a flowing granulate.

Using a conventional uniaxial press, blank cutting tool shapes were pressed at 100 MPa to a green density in excess of 55% of the full theoretical pore-free ceramic density. The shapes were sintered, yielding a product with a density in excess of 99% of the theoretical density, using an inert argon atmosphere under an excess gas pressure over atmospheric pressure of 20 atmospheres and a maximum temperature of 1600°C for 30 minutes.

The so produced ceramic material had the following properties:
- Flexural strength (according to test method EN 843-1, size B, 180 grit machined surfaces, four-point bending):: 521 ± 58 Mpa;
- Hardness (HV5):: 2055 ± 90;
- Palmqvist toughness (HV5, total ±: crack length):223 ± 25 µm
- Density:: 4.22 g/cm3;
- Al₂O₃ grain size:: < 0.2 µm.

Cutting tools of this material prepared in the ISO RCGX 120700 T4 geometry were tested against hot-pressed competitor materials for the machining of UX 200 Cr 13 hardened alloy steel (60HRC) in the manufacture of bar calibration rollers for the steel rolling industry. The following test conditions were applied:
- Surface speed:: 100 m/min;
- Feed rate:: 0.15 mm/rev;
- Depth of cut:: 0.2 - 1.0 mm
- Duration of cutting:: 80 min;
- Coolant:: None.

The wear damage produced by this machining schedule was minimal, and the overall performance was almost identical to that of a hot-pressed Al₂O₃/TiC cutting tool of the state of the art, used under identical cutting conditions.

### Example 2.

Cutting tools were manufactured in the same way as in example 1, but in the ISO style SNGN 120412 T2. The tools were tested in comparison with state of the art hot-pressed Al₂O₃/TiC cutting tools on a bar work-piece of 36NiCrMo4 hard alloy. The test conditions were
- Surface speed:: 600 m/min;
- Feed rate:: 0.25 mm/rev;
- Depth of cut:: 1.5 mm;
- Contact time:: 30 sec.
- Coolant:: Yes.

Only slight edge wear was detected in both the invention tools or in the hot-pressed cutting tools according to the prior art.

### Example 3

Alumina powder was prepared using the nucleated solution-sol-gel method, followed by calcining at 1000°C to achieve a sub micrometre powder. A commercially available zirconia powder, partially stabilised by yttria, was used. Titanium carbide powder was produced by carbothermal reaction between titanium oxide and carbon, the product was hammer-milled to break up aggregates and then ball-milled to achieve a fine nanometre-sized powder.

A mixture comprising 20 parts by weight of TiC, 70 parts by weight of Al₂O₃ and 10 parts by weight of yttria partially stabilised zirconia were milled together in an attritor mill to yield a powder having a specific surface area greater than 15 m²/g in suspension. A mixture of polyethylene glycol having molecular weight ranging of from 400 to 12000 and polyvinyl alcohol binders was added and the mixture was spray-dried to form a flowing granulate. Using a conventional uniaxial press, blank cutting tool shapes were pressed at 100 MPa to a green density in excess of 55% of theoretical density.

The shapes were sintered yielding a product with a density in excess of 99% of the theoretical density, using an inert argon atmosphere under an excess gas pressure over atmospheric pressure of 20 atmospheres and a maximum temperature of 1600 °C for 30 minutes.

The so produced ceramic material had the following properties:
- Flexural strength (according to test method EN 843-1, size B, 180 grit machined surfaces, four-point bending):: 485 ± 83 Mpa;
- Hardness (HV5):: 1950 ± 36;
- Palmqvist toughness (HV5, total crack length):: 215 ± 23µm
- Density:: 4.21 g/cm³;
- Al₂O₃ grain size:: < 0.2 µm.

Cutting tools of this material prepared in the ISO RCGX 120700 T4 geometry were tested in comparison with hot-pressed competitor materials for the machining of a K100 hardened cast iron (55HRC) in the manufacture of calibration rollers. The following test conditions were applied:
- Surface speed:: 70 m/min;
- Feed rate:: 0.70 mm/rev;
- Depth of cut:: 1.0 mm;
- Duration of cutting:: 4500 sec;
- Number of parts successfully machined per edge:: 3;
- Coolant:: Yes.

The wear damage produced by this machining schedule was minimal and the overall performance was almost identical to that of a hot-pressed Al₂O₃/TiC cutting tool of the state of the art, used under identical cutting conditions.

## Claims

1. A nanocomposite dense sintered alumina and/or alumina/zirconia ceramic cutting tool, obtainable by cold pressing a spray-dried suspension of a nanosized powder of alumina and/or alumina/zirconia, having an average particle size lower than 200 nanometres, containing from 1 to 35% by weight of a hard particle phase consisting of TiC and having a diameter smaller than 200 nanometres, in the presence of additives consisting of a mixture of polyethylene glycol and polyvinyl alcohol binders, to produce blanks, by sintering the so obtained blanks, at a maximum temperature of 1600°C, for a time of from 30 to 90 minutes, in an inert atmosphere under raised gas pressure and by machining the so obtained densified sintered blank into standard indexable insert cutting tool.

2. A cutting tool according to claim 1, **characterised in that** it presents a hardness ranging from 1900 to 2100 HV5, Palmqvist toughness, described in terms of total crack length, ranging from 200 to 250 µm and flank wear pattern during the working operation, (VB max) as large as 0.20 to 0.70 mm when machining hardened alloy steel (34CrNiMo6V) at 400 m/min for 500 sec before the tool has to be rejected on working finish quality grounds.

3. Process for preparing a nanocomposite dense sintered alumina and/or alumina/zirconia ceramic cutting tool **characterised** as comprising the following steps:
a) cold pressing a spray-dried suspension of a nanosized powder of alumina and/or alumina/zirconia, having an average particle size lower than 200 nanometres, containing from 1 to 35% by weight of a hard particle phase consisting of TiC and having a diameter smaller than 200 nanometres, in the presence of additives consisting of a mixture of polyethylene glycol and polyvinyl alcohol binders,
b) sintering the so obtained pressed product at a maximum temperature of 1600°C, for a time of from 30 to 90 minutes, in an inert atmosphere under raised gas pressure and
c) machining the so obtained densified sintered blank into standard indexable insert cutting tool.

4. Use of the cutting tool according to claim 1, for machining extremely hard (50-60 HRC) Fe-based and other alloys.

5. Use of the cutting tool according to claim 1, for metal cutting operations in the automotive, steel working and machinery industries.

## Revendications

1. Outil de coupe céramique à base d'alumine et/ou d'alumine/zircone nanocomposite frittée et dense, susceptible d'être obtenu par compression à froid d'une suspension séchée par atomisation d'une nanopoudre d'alumine et/ou d'alumine/zircone, dont la dimension moyenne des particules est inférieure à 200 nanomètres, qui contient de 1 à 35% en poids d'une fraction de particules dures consistant en TiC et ayant un diamètre inférieur à 200 nanomètres, en présence d'additifs consistant en un mélange de liants à base de polyéthylène glycol et d'alcool polyvinylique pour obtenir des ébauches, par frittage des ébauches ainsi obtenues, à une température maximale de 1600°C, durant 30 à 90 minutes, dans une atmosphère inerte sous pression gazeuse élevée et par usinage des ébauches frittées ainsi compactées en un outil de coupe à pièce amovible standard.

2. Outil de coupe selon la revendication 1, **caractérisé en ce qu'**il présente une dureté variant de 1900 à 2100 HV5, une résistance Palmqvist exprimée en longueur de fente totale, variant de 200 à 250 µm et un diagramme d'usure frontale en cours d'usinage (VB max) de 0,20 à 0,70 mm quand de l'alliage d'acier durci (34CrNiMo6V) est usiné à 400 m/min pendant 500 s avant que l'outil ne soit refusé pour des motifs de qualité du fini.

3. Procédé d'obtention d'un outil de coupe céramique à base d'alumine et/ou d'alumine/zircone nanocomposite frittée et dense, **caractérisé en ce qu'**il comprend les étapes suivantes :
a. compression à froid d'une suspension séchée par atomisation d'une nanopoudre d'alumine et/ou d'alumine/zircone, dont la dimension moyenne des particules est inférieure à 200 nanomètres, qui contient de 1 à 35% en poids d'une fraction de particules dures consistant en TiC et ayant un diamètre inférieur à 200 nanomètres, en présence d'additifs consistant en un mélange de liants à base de polyéthylène glycol et d'alcool polyvinylique,
b. frittage du produit comprimé ainsi obtenu, à une température maximale de 1600°C, durant 30 à 90 minutes, dans une atmosphère inerte sous pression gazeuse élevée, et
c. usinage de l'ébauche frittée et densifiée ainsi obtenue en un outil de coupe à pièce amovible standard.

4. Utilisation d'un outil de coupe selon la revendication 1, pour usiner des alliages à base de fer et d'autres alliages extrêmement durs.

5. Utilisation d'un outil de coupe selon la revendication 1, pour des opérations de coupe de métaux dans les industries automobile, du travail de l'acier et de la machinerie.

## Patentansprüche

1. Dicht gesintertes Nanokomposit-Aluminiumoxid- und/oder Aluminiumoxid-/Zirkoniumoxid-Keramik-Schneidwerkzeug, erhältlich durch Kaltverpressen einer sprühgetrockneten Suspension eines Nanopulvers aus Aluminiumoxid und/oder Aluminiumoxid/Zirkoniumoxid mit einer durchschnittlichen Teilchengrößer unterhalb von 200 nm, enthaltend 1 bis 35 Gew.-% einer Hartteilchenphase bestehend aus TiC mit einem Durchmesser kleiner als 200 nm, in Gegenwart von Additiven bestehend aus einem Gemisch von Polyethylenglykol- und Polyvinylalkohol-Bindemitteln zur Herstellung von Formlingen, durch Sintern der so erhaltenen Formlinge bei einer Maximaltemperatur von 1600°C über einen Zeitraum von 30 bis 90 Minuten in einer inerten Atmosphäre unter erhöhtem Gasdruck und durch Bearbeiten der so erhaltenen verdichteten gesinterten Formlinge zu einem indexierbaren Standard-Einsatz-Schneidwerkzeug.

2. Schneidwerkzeug nach Anspruch 1, **dadurch gekennzeichnet, dass** es eine Härte im Bereich von 1900 bis 2100 HV5, eine Palmqvist-Zähigkeit ausgedrückt als Gesamtrisslänge im Bereich von 200 bis 250 µm und ein Flankenabriebsmuster während des Betriebs (VB max) im Bereich von 0,20 bis 0,70 mm bei Bearbeitung mit gehärtetem Legierungsstahl (34CrNiMo6V) bei 400 m/min über 500 s aufweist, bevor das Werkzeug aufgrund seines Betriebsoberflächenzustandes zurückgewiesen werden muss.

3. Verfahren zur Herstellung eines Dicht gesintertes Nanokomposit-Aluminiumoxid- und/oder Aluminiumoxid-/Zirkoniumoxid-Keramik-Schneidwerkzeugs, **dadurch gekennzeichnet, dass** es die folgenden Stufen umfasst:
a) Kaltverpressen einer sprühgetrockneten Suspension eines Nanopulvers aus Aluminiumoxid und/oder Aluminiumoxid/Zirkoniumoxid mit einer durchschnittlichen Teilchengrößer unterhalb von 200 nm, enthaltend 1 bis 35 Gew.-% einer Hartteilchenphase bestehend aus TiC mit einem Durchmesser kleiner als 200 nm, in Gegenwart von Additiven bestehend aus einem Gemisch von Polyethylenglykol- und Polyvinylalkohol-Bindemitteln zur Herstellung von Formlingen, b) Sintern der so erhaltenen Formlinge bei einer Maximaltemperatur von 1600°C über einen Zeitraum von 30 bis 90 Minuten in einer inerten Atmosphäre unter erhöhtem Gasdruck und
c) Bearbeiten der so erhaltenen verdichteten gesinterten Formlinge zu einem indexierbaren Standard-Einsatz-Schneidwerkzeug.

4. Verwendung des Schneidwerkzeugs nach Anspruch 1 zur Bearbeitung von extrem harten (50-60 HRC) Legierungen auf Fe-Basis und anderen Legierungen.

5. Verwendung des Schneidwerkzeugs nach Anspruch 1 zum Metallschneiden in der Automobilindustrie, in der Stahlverarbeitung und im Maschinenbau.
